# EUROPEAN PATENT APPLICATION

(11) **EP 1 435 627 A2**
(43) Date of publication of application: **07.07.2004**
(21) Application number: 03029606.5
(22) Date of filing: 22.12.2003
(51) Int. Cl.: G21K 4/00

(54) **Radiographic image conversion panel**

(30) Priority: 26.12.2002 JP 2002377932
(71) Applicant: KONICA MINOLTA HOLDINGS, INC., Tokyo 100-0005 (JP)
(72) Inventor: Honda, Satoshi, Hino-shi Tokyo 191-8511 (JP); Morikawa, Osamu, Hino-shi Tokyo 191-8511 (JP); Shoji, Takehiko, Hino-shi Tokyo 191-8511 (JP); Nozaki, Atsuo, Hino-shi Tokyo 191-8511 (JP); Otani, Hiroshi, Hino-shi Tokyo 191-8511 (JP)
(74) Representative: Henkel, Feiler & Hänzel

(57) **Abstract**

A radiographic image conversion panel including: a supporting member (11); a photostimulable phosphor layer (12) provided on the supporting member, surface energy of the photostimulable phosphor layer being in a range of 10 to 50 erg/cm²; and a protection layer (17) for covering the photostimulable phosphor layer.

## Description

### BACKGROUND OF THE INVENTION

### Field of the Invention

The present invention relates to a radiographic image conversion panel using photostimulable phosphor.

### Description of Related Art

Conventionally, radiographic image conversion panels where a photostimulable phosphor layer is provided on a support member have been developed as a way for forming radiographic images without using silver salt to obtain radiographic images.

The radiographic image conversion panel can accumulate radiation energy corresponding to radioparent density of each part of a subject by exposing radiation transmitted through the subject to a photostimulable phosphor layer. Subsequently, the radiation energy accumulated in the photostimulable phosphor layer is released as photostimulated luminescence by exciting the photostimulable phosphor in time series with electromagnetic waves (excitation light) such as visible light, infrared ray or the like. Signals on the basis of variations of this light can be for example photoelectrically converted to obtain electric signals, which can be reproduced as visible images on a display device such as CRT, recording materials such as silver halide photographic photosensitive materials, or the like.

The superiority or inferiority of radiographic imaging system using the radiographic image conversion panel highly depends on photostimulable luminescence luminance and luminescence homogeneity of the panel, and particularly it has been known that these properties are highly dominated by the properties of the photostimulable phosphor used.

Recently, a radiation panel using the photostimulable phosphor where Eu is activated by alkali halide such as CsBr as a host has been proposed. Particularly, it can be expected that improvement of X-ray conversion efficiency which has been conventionally impossible becomes possible by making Eu an activator, and it is forecasted that the radiation panel is frequently used for X-ray imaging diagnostic instruments for medical use.

The radiographic image conversion panel in use is repeatedly used with cycles of irradiation of the radiation (record of radiation image), irradiation of excitation light (reading out the recorded radiation image) and irradiation of elimination light (elimination of residual radiation image). Transfer of the radiographic image conversion panel to each step is performed by a transfer member such as belt and roller, and after completion of one cycle, the panel is typically stacked and stored.

However, when the radiographic image conversion panel having a protection layer formed by coating as the above is repeatedly used in this way and stored for a long time, the sensitivity thereof is sometimes lowered and the image quality is sometimes deteriorated due to moisture absorption of the phosphor layer. Particularly, the phosphor layer formed by a vapor phase deposition method absorbs moisture easily because the phosphor is not covered with a binder and the like.

As the protection layer to prevent the moisture absorption, glass is the most preferable in the light of moisture permeability, but in case of glass, generally a thickness of 400 µm or more is required in terms of strength in a manufacturing process. Thus, in the case of the glass protection layer, deterioration of the image quality (blurring) sometimes occurs due to diffusion of light, and that has not been necessarily satisfactory.

On the other hand, a thin transparent resin film has no problem in strength in the manufacturing process even when the thickness is 100 µm or less, and is preferable in terms of initial image quality because of a thin layer. However, that is inferior in moisture resistant durability and the image quality has been easily deteriorated due to the moisture absorption of the phosphor layer while that is stored in a condition at high temperature and high humidity.

A method for obtaining a radiographic image conversion panel by covering the photostimulable phosphor layer with the resin film to which an inorganic matter such as a metal oxide is vapor-deposited or by thermally adhering them at a periphery of the support member with reducing the pressure, or by enclosing dry nitrogen gas and thermally adhering them (e.g., Japanese Patent Publication (Laid-open) No. Tokukai-2002-107495, page 9), are known.

However, the moisture resistant durability thereof has been sometimes deteriorated because the inorganic matter such as the metal oxide is scraped or cracked due to running by the transfer member such as belts and rollers of the radiographic image conversion panel in use. When the sensitivity of the photostimulable phosphor is decreased due to the moisture absorption, there has been a possibility that the image quality is deteriorated to shorten a lifetime of the radiographic image conversion panel.

### SUMMARY OF INVENTION

An object of the present invention is to provide a radiographic image conversion panel which is excellent in moisture resistant durability and can be used in a good condition for a long time.

In accordance with a first aspect of the invention, the radiographic image conversion panel comprises: a supporting member; a photostimulable phosphor layer provided on the supporting member, surface energy of the photostimulable phosphor layer being in a range of 10 to 50 erg/cm²; and a protection layer for covering the photostimulable phosphor layer.

Preferably, a surface of the photostimulable phosphor layer is treated with a water-repellent agent.

A surface of the photostimulable phosphor layer may be treated with a metal oxide.

The photostimulable phosphor layer may be formed by containing a photostimulable phosphor represented by the following general formula (1):

M¹X·aM²X'₂·bM³X"₃:eA (1),

where M¹ is at least one alkali metal selected from the group consisting of Li, Na, K, Rb and Cs; M² is at least one bivalent metal selected from the group consisting of Be, Mg, Ca, Sr, Ba, Zn, Cd, Cu and Ni; M³ is at least one trivalent metal selected from the group consisting of Sc, Y, La, Ce, Pr, Nd, Pm, Sm, Eu, Gd, Tb, Dy, Ho, Er, Tm, Yb, Lu, Al, Ga and In; X, X' and X" are at least one halogen selected from the group consisting of F, Cl, Br and I; "A" is at least one metal selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg; and "a", "b" and "e" represent numerical values in ranges of 0≤a<0.5, 0≤b<0.5 and 0<e≤0.2, respectively.

Preferably, the photostimulable phosphor layer comprises a photostimulable phosphor represented by the following general formula (2):

M¹X:A (2),

where M¹ represents Cs or Rb, and X represents Br or I, and "A" represents Eu or Tl.

The photostimulable phosphor layer preferably comprises a columnar crystal structure formed by a vapor phase deposition method on the supporting member.

According to this invention, it is possible to obtain the radiographic image conversion panel which is more excellent in moisture resistant durability and can be used in the good condition for a long time by forming the photostimulable phosphor layer on the support member of the radiographic image conversion panel and subsequently making the surface energy on the photostimulable phosphor layer in the range of 10 to 50 erg/cm².

### BRIEF DESCRIPTION OF THE DRAWINGS

The present invention will become more fully understood from the detailed description given hereinbelow and the accompanying drawing which are given by way of illustration only, and thus are not intended as a definition of the limits of the present invention, and wherein;
FIG. 1 is a view showing a radiographic image conversion panel in an embodiment of the invention, and
FIG. 2 is a view showing an appearance where a photostimulable phosphor layer is formed on a support member by a vapor deposition method.

### PREFERRED EMBODIMENT OF THE INVENTION

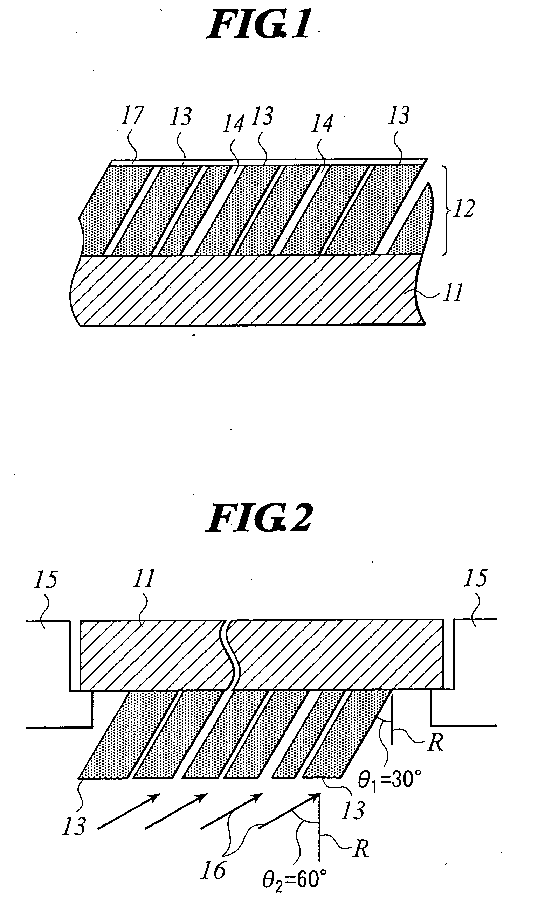

Hereinafter, an embodiment of the invention will be explained in detail with reference to the drawings. As shown in FIG. 1, in the radiographic image conversion panel in the embodiment of the invention, the photostimulable phosphor layer 12 which includes columnar crystals 13 of photostimulable phosphor and spaces 14 formed between the columnar crystals 13 is formed on one face of the support member 11 with a thickness of 50 µm or more, preferably from 300 to 500 µm, by the vapor phase deposition method. On the photostimulable phosphor layer 12, a protection layer 17 for protecting the layer 12 is provided.

As the support member 11, it is possible to use carbon fiber impregnated with resin (carbon fiber reinforced resin). Concretely, commercially available carbon fiber, for example, #132, carbon fiber impregnated with epoxy resin which is produced by Toho Rayon Co., Ltd., is included. Those with heat resistance can be optionally selected from materials known in the art as the support members of the conventional radiographic image conversion panels, and it is possible to use quartz glass sheet, metallic sheet made up of aluminium, iron, tin, chromium and the like, resin sheet made up of aramid and the like, and ones bonded together.

As the photostimulable phosphor preferably used for the invention, it is possible to use those represented by the general formula (1).

M¹X·aM²X'₂·bM³X"₃:eA (1),

In the general formula (1), M¹ is at least one alkali metal selected from the group consisting of Li, Na, K, Rb and Cs, and particularly it is preferred that M¹ is at least one alkali metal selected from the group consisting of K, Rb and Cs.

In the general formula (1), M² is at least one bivalent metal selected from the group consisting of Be, Mg, Ca, Sr, Ba, Zn, Cd, Cu and Ni, and particularly it is preferred that M² is at least one bivalent metal selected from the group consisting of Be, Mg, Ca, Sr and Ba.

In the general formula (1), M³ is at least one trivalent metal selected from the group consisting of Sc, Y, La, Ce, Pr, Nd, Pm, Sm, Eu, Gd, Tb, Dy, Ho, Er, Tm, Yb, Lu, Al, Ga and In, and particularly it is preferred that M³ is at least one trivalent metal selected from the group consisting of Y, La, Ce, Sm, Eu, Gd, Lu, Al, Ga and In.

In the general formula (1), X, X' and X" are at least one halogen selected from the group consisting of F, Cl, Br and I, and particularly it is preferred that X is at least one halogen selected from the group consisting of Br and I.

In the general formula (1), "A" is at least one metal selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg, and particularly it is preferred that A is at least one metal selected from the group consisting of Eu, Cs, Sm, Tl and Na.

In the general formula (1), "a", "b" and "e" represent numerical values in the ranges of 0≤a<0.5, 0≤b<0.5 and 0<e≤0.2, respectively, and particularly it is preferred that b represents the numerical value in the range of 0≤b≤10⁻².

It is also preferred that the photostimulable phosphor layer 12 containing the photostimulable phosphor represented by the general formula (1) has columnar crystals 13 of the photostimulable phosphor.

Further, it is preferred that the above columnar crystals particularly have the photostimulable phosphor represented by the following general formula (2).

M¹X:A (2)

wherein, M¹ represents Cs or Rb, X represents Br or I, and "A" represents Eu or Tl.

The above photostimulable phosphor is manufactured using, for example, the following phosphor basic ingredients (a) to (d) by the method for manufacturing described below.
(a) At least one or more compounds selected from the group consisting of LiF, LiCl, LiBr, LiI, NaF, NaCl, NaBr, NaI, KF, KCl, KBr, KI, RbF, RbCl, RbBr, RbI, CsF, CsCl, CsBr and CsI.
(b) At least one or more compounds selected from the group consisting of BeF₂, BeCl₂, BeBr₂, BeI₂, MgF₂, MgCl₂, MgBr₂, MgI₂, CaF₂, CaCl₂, CaBr₂, CaI₂, SrF₂, SrCl₂, SrBr₂, SrI₂, BaF₂, BaCl₂, BaBr₂, BaI₂, ZnF₂, ZnCl₂, ZnBr₂, ZnI₂, CdF₂, CdCl₂, CdBr₂, CdI₂, CuF₂, CuCl₂, CuBr₂, CuI₂, NiF₂, NiCl₂, NiBr₂ and NiI₂.
(c) At least one or more compounds selected from the group consisting of ScF₃, ScCl₃, ScBr₃, ScI₃, YF₃, YCl₃, YBr₃, YI₃, LaF₃, LaCl₃, LaBr₃, LaI₃, CeF₃, CeCl₃, CeBr₃, CeI₃, PrF₃, PrCl₃, PrBr₃, PrI₃, NdF₃, NdCl₃, NdBr₃, NdI₃, PmF₃, PmCl₃, PmBr₃, PmI₃, SmF₃, SmCl₃, SmBr₃, SmI₃, EuF₃, EuCl₃, EuBr₃, EuI₃, GdF₃, GdCl₃, GdBr₃, GdI₃, TbF₃, TbCl₃, TbBr₃, TbI₃, DyF₃, DyCl₃, DyBr₃, DyI₃, HoF₃, HoCl₃, HoBr₃, HoI₃, ErF₃, ErCl₃, ErBr₃, ErI₃, TmF₃, TmCl₃, TmBr₃, TmI₃, YbF₃, YbCl₃, YbBr₃, YbI₃, LuF₃, LuCl₃, LuBr₃, LuI₃, AlF₃, AlCl₃, AlBr₃, AlI₃, GaF₃, GaCl₃, GaBr₃, GaI₃, InF₃, InCl₃, InBr₃ and InI₃.
(d) At least one or more metals selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg.

The above-described phosphor basic ingredients (a) to (d) are weighed to be in the ranges of a, b and e in the general formula (1), and mixed with pure water. At that time, the ingredients may be thoroughly mixed using a mortar, ball mill, mixer mill and the like.

Next, the given acid is added to adjust the pH value C of the obtained mix solution at 0<C<7, and subsequently water is evaporated/vaporized.

Next, the obtained basic ingredient mixture is filled in a heat resistant vessel such as a quartz crucible and an alumina crucible, and calcination is carried out in an electric furnace. A calcining temperature is preferably from 500 to 1000°C. A calcining time period varies depending on a filled amount of the basic ingredient mixture, the calcining temperature and the like, but is preferably from 0.5 to 6 hours.

As a calcining atmosphere, preferred is a mild reducing atmosphere such as a nitrogen atmosphere comprising a small amount of hydrogen gas and a carbon dioxide gas atmosphere comprising a small amount of carbon monoxide, a neutral atmosphere such as the nitrogen gas atmosphere and an argon gas atmosphere, or a mild oxidizing atmosphere comprising a small amount of oxygen gas.

The luminescence luminance of the photostimulable phosphor can be further enhanced when after calcining once under the above calcining condition, a calcined matter is removed from the electric furnace and pulverized, subsequently the calcined powder is filled again in the heat resistant vessel, which is placed in the electric furnace, and recalcined under the same condition as the above. Also, the desired photostimulable phosphor can be obtained by removing the calcined matter from the electric furnace and standing to cool in air when the calcined matter is cooled from the calcining temperature to room temperature. But, cooling may be performed in the same mild reducing atmosphere, neutral atmosphere or mild oxidizing atmosphere as that at the calcination.

The luminescence luminance by photostimulation of the obtained photostimulable phosphor can be still further enhanced by moving the calcined matter from a heating section to a cooling section in the electric furnace and rapidly cooling in the mild reducing atmosphere, neutral atmosphere or mild oxidizing atmosphere.

The photostimulable phosphor layer 12 is formed on one face of the support member 11 using the above photostimulable phosphor and the vapor phase deposition method.

As the vapor phase deposition method, it is possible to use a PVD method (physical vapor deposition), a sputtering method, a CVD method (chemical vapor deposition), an ion plating method and the like.

In the PVD method, first, the support member 11 is placed in a vapor deposition apparatus, and subsequently air in the apparatus is discharged to make a vacuum degree of about 1.333 x 10⁻⁴ Pa.

Then, at least one of the photostimulable phosphors is vaporized with heat by the method such as a resistant heating method and an electron beam method to grow the photostimulable phosphor to the desired thickness on the surface of the support member 11.

A film thickness of the photostimulable phosphor layer 12 varies depending on the intended use of the radiographic image conversion panel and the type of photostimulable phosphor, and is 50 µm or more and preferably from 300 to 500 µm.

As a result, the photostimulable phosphor layer 12 which contains no binding agent is formed, but it is also possible to form the photostimulable phosphor layer 12 by splitting into multiple depositions in the vapor deposition step.

In the vapor deposition step, it is also possible to synthesize the aimed photostimulable phosphor on the support member 11 and simultaneously form the photostimulable phosphor layer 12 by co-depositing using multiple resistant heating machines or electron beams.

In the sputtering method, as with the PVD method, the support member 11 is placed in a sputtering apparatus, and subsequently air in the apparatus is discharged to make a vacuum degree of about 1.333 x 10⁻⁴ Pa. Then, an inert gas for the sputtering such as Ar and Ne is introduced into the apparatus to make a gas pressure of about 1.333 x 10⁻¹ Pa. Next, the photostimulable phosphor layer 12 is grown to the desired thickness on the support member 11 by sputtering the photostimulable phosphor as a target.

When the photostimulable phosphor layer 12 is made by the vapor phase deposition method, the temperature of the support member 11 on which the photostimulable phosphor layer 12 is made is preferably set at 50°C or above, more preferably 150°C or above, and particularly preferably from 150°C to 400°C.

FIG. 2 is a view showing an appearance where the photostimulable phosphor layer 12 is formed on the support member 11 by the vapor deposition. When an incident angle of vapor flow 16 of the photostimulable phosphor against a normal line direction (R) of the support member 11 face fixed to support holders 15 is made θ₂ (60° in the figure) and an angle of the formed columnar crystal 13 against the normal line direction (R) of the support face is made θ₁ (30° in the figure), then θ₁ empirically becomes a half of θ₂ and the columnar crystals 13 are formed at this angle.

Further, a filler such as a binding agent may be filled in the space formed between the columnar crystals 13 to reinforce the photostimulable phosphor layer 12, and further substance with high light absorption or high light reflection may be filled. This gives a reinforcing effect, and further is effective for reducing light diffusion of photostimulable excitation light which incidents in the photostimulable phosphor layer to a horizontal direction.

In the sputtering method, it is possible to use various application treatments as with the PVD method. That is similar in the CVD method, the ion plating method and the other methods. A growth rate of the photostimulable phosphor layer 12 in the vapor phase deposition method is preferably from 0.05 µm/min to 300 µm/min. When the growth rate is less than 0.05 µm/min, productivity of the radiographic image conversion panels is poor, and thus it is not preferable. Also when the growth rate is more than 300 µm/min, control of the growth rate is difficult, and thus it is not preferable.

In the invention, the surface treatment to make surface energy 10 to 50 erg/cm², preferably 10 to 34 erg/cm² is performed for the radiographic image conversion panel having the photostimulable phosphor layer 12 using the vapor phase deposition method. When making the surface energy 50 erg/cm² or more, sufficient moisture resistant durability can not be obtained. Also it is difficult to make the surface energy 10 erg/cm² or less.

As a surface treatment method, there is a method for forming a film made up of a water-repellent agent or a metal oxide on the surface of the photostimulable phosphor layer 12.

As the water-repellent agents, included are alkoxysilane, mercaptosilane, vinylsilane, epoxysilane, methacyloxysilane, aminosilane, ureidosilane, chlorosilane, silicon oil, polysiloxane, polysilazane, polyparaxylylene, polymonochloroparaxylene and the like.

As the method for forming the film made up of the water-repellent agent on the surface of the photostimulable phosphor layer 12, there are the CVD method, PE-CVD method (plasma enhanced CVD), spin coat method, dipping method and the like.

A process for performing the vapor deposition of diparaxylylene by CVD to form the thin film of polyparaxylylene is described as a specific example below.

First, diparaxylylene is vaporized at about 175°C and about 133 Pa in a vaporizing chamber of a CVD apparatus. The vaporized diparaxylylene is delivered to a pyrolytic chamber and thermally decomposed at about 680 °C and about 67 Pa to produce diradical paraxylylene monomer.

Then, diradical paraxylylene monomer is delivered to a vapor deposition chamber at about 35 °C and about 13 Pa in which the support member 11 on which the photostimulable phosphor layer 12 has been formed is placed, and the thin film of polyparaxylylene is formed by depositing diradical paraxylylene monomer on the surface of the photostimulable phosphor layer 12 and simultaneously polymerizing diradical paraxylylene monomer on the surface of the photostimulable phosphor layer 12.

These are the same for alkoxysilane, mercaptosilane, vinylsilane, epoxysilane, methacyloxysilane, aminosilane, ureidosilane, chlorosilane, silicon oil, polysiloxane, polysilazane, polymonochloroparaxylene, and the like.

As the metal oxides, included are silica, alumina, titanium oxide and the like.

As the method for forming the film made up of the metal oxide on the surface of the photostimulable phosphor layer 12, it is possible to use the methods such as the PVD method, sputtering method, CVD method, PE-CVD method and ion plating method.

The thickness of the film of the water-repellent agent or the metal oxide formed as the above is preferably from 0.1 nm to 200 µm, and more preferably from 1 nm to 20 µm.

After performing the surface treatment as the above, a protection layer 17 is provided on the side of the photostimulable phosphor layer 12 opposite to the support member 11. The protection layer 17 may be formed by directly coating a coating solution for the protection layer 17 on the surface of the photostimulable phosphor layer 12, or the precedently separately formed protection layer may be adhered to the photostimulable phosphor layer 12.

As materials of the protection layer 17, used are standard materials for the protection layer such as acetate cellulose, nitrocellulose, polymethylmethacrylate, polyvinyl butyral, polyvinyl formal, polycarbonate, polyester, polyethylene terephthalate, polyethylene, polyvinylidene chloride, nylon, polytetrafluoroethylene, polytrifluoro-ethylene chloride, tetrafluoroethylenehexafluoropropylene copolymer, vinylidene chloride-vinyl chloride copolymer, vinylidene chloride-acrylonitrile copolymer and the like. Additionally, it is also possible to use transparent glass substrates as the protection layer 17.

These resin films may also have an inorganic layer with low moisture permeability and low oxygen permeability in lamination. It is preferred that the resin film where the inorganic layer is laminated has a light transmittance of 90% or more at a wavelength of 300 nm to 1000 nm, and it is preferred that a layer thickness of the protection layer 17 is from 0.1 to 2000 µm.

As such inorganic substances, there are SiOₓ (SiO, SiO₂), Al₂O₃, ZrO₂, SnO₂, SiC, SiN and the like. In these, the light transmittance is high and both moisture permeability and oxygen permeability are high in Al₂O₃ and SiOₓ. That is, they are particularly preferable because the dense film with less cracks and micropores can be formed. Al₂O₃ and SiOₓ may be laminated alone, but since it is possible to make the moisture and oxygen permeability high when the both are together laminated, it is more preferable to laminate both Al₂O₃ and SiOₓ.

In the lamination of the inorganic substance onto the resin film, it is possible to use the methods such as the PVD method, sputtering method, CVD method, PE-CVD method and the like. The lamination may be carried out after joining the resin film to the phosphor layer or before joining to the phosphor layer. It is preferred that the lamination thickness is from 0.01 µm to 1 µm.

### Example:

The present invention is specifically described below by examples, but the invention is not limited to these examples.

### <Making a photostimulable phosphor layer on a support member>

A base plate to become a support member was obtained by applying a pressure of 4.9 x 10 N/cm to a feeding heat roller as a carbon fiber resin plate (#132 supplied from Toho Rayon Co., Ltd.) with a film thickness of 1 mm is fed at a feeding velocity of 1.0 m/min. A photostimulable phosphor layer was formed by vapor-depositing photostimulable phosphor (CsBr:Eu, RbBr:Eu or RbBr:Tl) on one face of the support member.

Vapor deposition was carried out using an aluminium slit by making a distance between the support member and the slit 60 cm as the base plate is fed in a direction parallel to the base plate, and adjusted such that the thickness of the photostimulable phosphor layer becomes 600 µm.

Upon the vapor deposition, the support member was placed in the vapor deposition chamber, and then phosphor basic ingredients (any of CsBr:Eu, RbBr:Eu or RbBr:Tl) was press molded as a vapor deposition source and placed in a water-cooled crucible.

### <Surface treatment>

The following surface treatment was given to the surface of the photostimulable phosphor layer formed on the support member.

### Sample 1:

The film of alkoxysilane was formed by the CVD method on the surface of the photostimulable phosphor layer made up of CsBr:Eu.

### Sample 2:

The film of mercaptosilane was formed by the CVD method on the surface of the photostimulable phosphor layer made up of CsBr:Eu.

### Sample 3:

The film of mercaptosilane was formed by the CVD method on the surface of the photostimulable phosphor layer made up of RbBr:Eu.

### Sample 4:

The film of silicon oil was formed by the CVD method on the surface of the photostimulable phosphor layer made up of CsBr:Eu.

### Sample 5:

The film of polysiloxane was formed by the spin coat method on the surface of the photostimulable phosphor layer made up of CsBr:Eu.

### Sample 6:

The film of polysilazane was formed by the spin coat method on the surface of the photostimulable phosphor layer made up of CsBr:Eu.

### Sample 7:

The film of polyparaxylylene was formed by the CVD method on the surface of the photostimulable phosphor layer made up of CsBr:Eu.

### Sample 8:

The film of polymonochloroparaxylene was formed by the CVD method on the surface of the photostimulable phosphor layer made up of CsBr:Eu.

### Sample 9:

The film of polymonochloroparaxylene was formed by the CVD method on the surface of the photostimulable phosphor layer made up of RbBr:Eu.

### Sample 10:

The film of silica was formed by the CVD method on the surface of the photostimulable phosphor layer made up of CsBr:Eu.

### Sample 11:

The film of silica was formed by the CVD method on the surface of the photostimulable phosphor layer made up of RbBr:Eu.

### Sample 12:

The film of silica or alumina was formed by the CVD method on the surface of the photostimulable phosphor layer made up of CsBr:Eu.

### Sample 13:

The film of alumina was formed by the CVD method on the surface of the photostimulable phosphor layer made up of RbBr:Tl.

Prepared were those with no surface treatment on the surface of the photostimulable phosphor layers made up of CsBr:Eu as comparative sample 14. Further, prepared were those with no surface treatment on the surface of the photostimulable phosphor layers made up of RbBr:Eu as comparative sample 15.

The film was formed at 240°C in the CVD method or the PVD method. The film was formed at 400°C for polysiloxane and 100°C for polysilazane in the spin coat method.

The thickness of the formed film was 0.1 µm for alkoxysilane or mercaptosilane, 1 µm for alumina, 10 µm for silicone oil, polysiloxane or polysilazane, or 20 µm for polyparaxylylene or polymonochloroparaxylene.

### <Measurement of surface energy>

The surface energy of Samples 1-15 were evaluated as follows.

A surface contact angle of a drop was measured by a drop dripping method using a microsyringe, and the surface energy was obtained by calculation. A commercially available measuring apparatus (e.g., Pioneer 300 supplied from Bel Japan Inc.) was used for the measurement of the contact angle.

### <Moisture resistant durability>

The protection layer was provided on the photostimulable phosphor layer after the surface treatment, which was then left under the environment at 40°C and at humidity of 90% for a month, and subsequently the relative changes of photostimulable luminescence intensity were evaluated on a scale of one to five.

The evaluation on the scale of one to five denotes "5": 5% of less reduction of luminance, "4": 5 to 10% reduction of luminance, "3": 10 to 30% reduction of luminance, "2": 30 to 50% reduction of luminance, and "1": 50% or more reduction of luminance, respectively.

The evaluation results of Samples 1-15 are shown in Table 1.

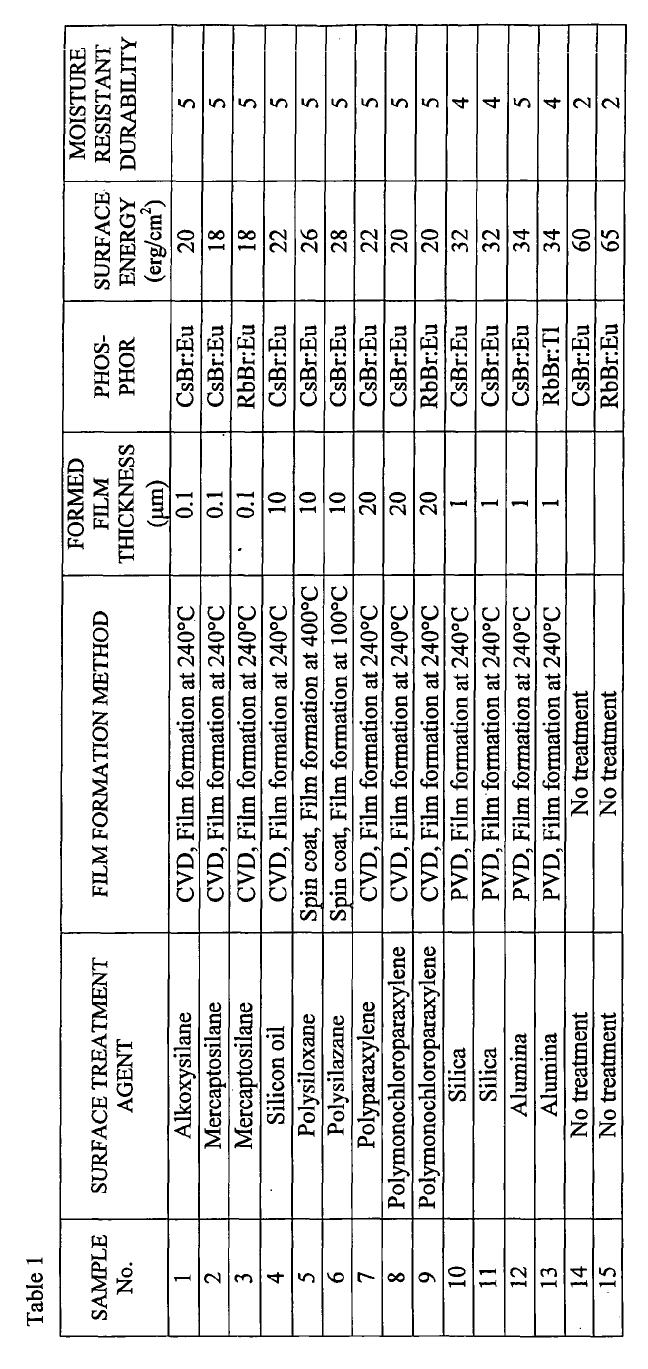

On those (Samples 1-9) surface-treated with the water-repellent agent of any of alkoxysilane, mercaptosilane, silicon oil, polysiloxane, polysilazane, polyparaxylylene or polymonochloroparaxylene, the surface energy was reduced to 18 to 28 erg/cm². The reduction of the photostimulable luminescence intensity after leaving at 40°C and at humidity of 90% for a month was 5% or less.

On those (Samples 10-13) surface-treated with the metal oxide of any of silica or alumina, although the surface energy was higher than that on those treated with the water-repellent agent, it was reduced to 32 to 34 erg/cm². Also, the reduction of the photostimulable luminescence intensity after leaving at 40°C and at humidity of 90% for a month was 10% or less.

On the other hand, on those (Samples 14 and 15) with no surface treatment, the surface energy was high which was from 60 to 65 erg/cm², and the reduction of the photostimulable luminescence intensity after leaving at 40°C and at humidity of 90% for a month was from 30 to 50%.

As described above, it is possible to obtain the radiographic image conversion panel which is excellent in moisture resistant durability and can be used in the good condition for a long time by treating the surface of the photostimulable phosphor layer with the water-repellent agent or the metal oxide.

### The entire disclosure of Japanese Patent Application

No. Tokugan 2002-377932 which was filed on December 26, 2002, including specification, claims, drawings and summary are incorporated herein by reference in its entirety.

## Claims

1. A radiographic image conversion panel comprising:
a supporting member;
a photostimulable phosphor layer provided on the supporting member, surface energy of the photostimulable phosphor layer being in a range of 10 to 50 erg/cm²; and
a protection layer for covering the photostimulable phosphor layer.

2. The panel of claim 1, wherein a surface of the photostimulable phosphor layer is treated with a water-repellent agent.

3. The panel of claim 1, wherein a surface of the photostimulable phosphor layer is treated with a metal oxide.

4. The panel of claim 1, wherein the photostimulable phosphor layer is formed by containing a photostimulable phosphor represented by the following general formula (1):
M¹X·aM²X'₂·bM³X"₃:eA (1),
where M¹ is at least one alkali metal selected from the group consisting of Li, Na, K, Rb and Cs; M² is at least one bivalent metal selected from the group consisting of Be, Mg, Ca, Sr, Ba, Zn, Cd, Cu and Ni; M³ is at least one trivalent metal selected from the group consisting of Sc, Y, La, Ce, Pr, Nd, Pm, Sm, Eu, Gd, Tb, Dy, Ho, Er, Tm, Yb, Lu, Al, Ga and In; X, X' and X" are at least one halogen selected from the group consisting of F, Cl, Br and I; A is at least one metal selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg; and a, b and e represent numerical values in ranges of 0≤a<0.5, 0≤b<0.5 and 0<e≤0.2, respectively.

5. The panel of any one of claims 1-4, wherein the photostimulable phosphor layer comprises a photostimulable phosphor represented by the following general formula (2):
M¹X:A (2),
where M¹ represents Cs or Rb, and X represents Br or I, and A represents Eu or Tl.

6. The panel of any one of claims 1-5, wherein the photostimulable phosphor layer comprises a columnar crystal structure formed by a vapor phase deposition method on the supporting member.
